# EUROPÄISCHE PATENTSCHRIFT

(11) **EP 2 442 937 B1**
(45) Veröffentlichungstag und Bekanntmachung des Hinweises auf die Patenterteilung: **07.05.2014**
(21) Anmeldenummer: 10726864.1
(22) Anmeldetag: 11.06.2010
(51) Int. Cl.: B23F 1/06

(54) **VERFAHREN UND WERKZEUGVORRICHTUNG ZUM PROFILFRÄSEN**
METHOD AND TOOL DEVICE FOR PROFILE MILLING
PROCÉDÉ ET DISPOSITIF D'OUTIL POUR PROFILAGE À LA FRAISE

(30) Priorität: 19.06.2009 AT 9492009
(43) Veröffentlichungstag der Anmeldung: 25.04.2012
(73) Patentinhaber: WFL Millturn Technologies GmbH & Co. KG, 4030 Linz (AT)
(72) Erfinder: PERNKOPF, Friedrich, A-4040 Linz (AT)
(74) Vertreter: Jell, Friedrich
(86) Internationale Anmeldenummer: PCT/AT2010/000207
(87) Internationale Veröffentlichungsnummer: WO 2010/144929

(56) Entgegenhaltungen:
- WO-A1-01/39916
- WO-A1-2008/133517
- JP-A- 61 168 420

## Beschreibung

### Technisches Gebiet

Die Erfindung betrifft eine Vorrichtung und ein Verfahren zum Profilfräsen wenigstens einer Zahnflanke eines Zahns aus einem Werkstück bei dem die Zahnflanke mit mindestens einem Fräswerkzeug abschnittsweise gefräst wird, welches Fräswerkzeug ein konkaves und ein gegenüber der zu fräsenden Zahnflanke zumindest teilweise abweichendes Fräsprofil aufweist, wobei insbesondere das Fräswerkzeug zwischen wenigstens zwei Fräsabschnitten unterschiedlich an das Werkstück angestellt wird.

### Stand der Technik

Um eine Zahnflanke eines Zahns eines Zahnrads herstellen zu können, sind aus dem Stand der Technik verschiedenste Verfahren bekannt. Neben einem Profilfräsen in einem Schritt (, auch unter Formfräsen bekannt,) ist auch aus der W02008/133517A1 ein Profilfräsen bekannt, bei dem mit einem konkaven Fräswerkzeug abschnittsweise bzw. schrittweise die Zahnflanke gefräst wird. Dafür wird ein Fräswerkzeug vorgeschlagen, dass ein gegenüber der zu fräsenden Zahnflanke teilweise abweichendes konkaves Fräsprofil aufweist bzw. annähernd gleich der zu fräsenden Zahnflanke verlaufend ist. Zwar kann mit einer derartigen Bedingung eine Zahnflanke in vergleichsweise geringen Schritten bzw. wenigen Abschnitten schnell gefertigt werden, weil ja mit geringen Profilabweichungen zu rechnen ist, jedoch stellt ein derartiges, am Zahnflankenprofil stark orientiertes Fräsprofil wiederum nachteilig einen vergleichsweise eng eingegrenzten Anwendungsbereich für das Fräswerkzeug dar, was bereits vom Formfräsen bekannt ist. Diese Vorrichtung bzw. dieses Verfahren kann daher eine universelle Verwendbarkeit nicht gewährleisten bzw. fordert nachteilig eine Vielzahl an verschiedenen konkaven Fräswerkzeugen, was kostenintensiv ist.

Dokument JP 61 168 420 offenbart die Verwendung eines konkaven, schaftförmigen Fräswerkzeugs dessen Fräsprofil einen Evolventenverlauf ausbildet, zum Profilfräsen einer Zahnflanke eines Zahns aus einem Werkstück.

### Darstellung der Erfindung

Die Erfindung hat sich daher die Aufgabe gestellt, eine Vorrichtung und ein Verfahren der eingangs geschilderten Art derart zu verbessern, dass trotz der breiten Verwendbarkeit des Fräswerkzeugs eine Zahnflanke schnell und formgenau gefertigt werden kann. Außerdem soll die Vorrichtung kostengünstig sein und trotzdem eine universelle Anwendbarkeit gewährleisten können.

Die Erfindung löst die gestellte Aufgabe hinsichtlich des Verfahrens dadurch, dass die Zahnflanke mit einem Fräswerkzeug abschnittsweise gefräst wird, das ein Fräsprofil mit zumindest teilweise einem Evolventenverlauf aufweist.

Wird die Zahnflanke mit einem Fräswerkzeug abschnittsweise gefräst, das ein Fräsprofil mit zumindest teilweise einem Evolventenverlauf aufweist, so hat sich herausgestellt, dass damit eine Verfahrensbedingung geschaffen werden kann, die eine schnelle Fertigung für eine Vielzahl an unterschiedlichen Zahnflanken eröffnen kann. Denn es konnte gezeigt werden, dass durch die der Evolvente gemeine hohe Anzahl an unterschiedlichen Krümmungsradien auf einfache Weise jegliche konvexe Zahnflankenform angenähert werden kann, so dass lediglich mit geringen Profilabweichungen zu rechnen ist, was vorteilhaft ermöglicht, selbst mit einer geringen Anzahl an Fräsabschnitten ein profilgenaues Herstellen sicherstellen zu können. Es können daher gegenläufige Bedingungen, nämlich ein universell einsetzbares Fräswerkzeug auf der einen Seite und geringe Profilabweichungen auf der anderen Seite durch das erfindungsgemäße Fräsprofil zu einem verbesserten Verfahren zusammengeführt werden. Daher kann auch im Gegensatz zum Stand der Technik darauf verzichtet werden, das Fräsprofil an den Verlauf der zu erzeugenden Zahnflanke stark annähern zu müssen, so dass damit ein vergleichsweise begrenzt einsetzbares Fräswerkzeug ausgeschlossen werden kann. Dabei spielt es keine Rolle ob Hinterschneidungen durch das erfindungsgemäße Fräswerkzeug entstehen, diese können beispielsweise durch ein Aufmaß an der Zahnflanke kompensiert werden. Insbesondere kann dafür das Fräswerkzeug zwischen den Fräsabschnitten unterschiedlich an das Werkstück angestellt werden, um den Evolventenverlauf besser an die zu erzeugende Zahnflanke annähern zu können. Vorstellbar ist jedoch auch, dass statt dem Fräswerkzeug das Werkstück dementsprechend bewegt wird. Es ergeben sich daher gegenüber dem Stand der Technik vereinfachte Verfahrensbedingungen zum Profilfräsen mit einem konkaven Fräswerkzeug, welche Bedingungen sich insbesondere in einer beschleunigten Berechnung des Anstellwinkels bzw. der Anstellwinkel des Fräswerkzeugs am Werkstück äußern können. Solche beschleunigte Berechnungsverfahren der jeweiligen Anstellwinkel für die Fräsabschnitte des Fräswerkzeugs können daher nicht nur für ein profilgenaues Fräsen sorgen, sondern auch im allgemeinen zur Erhöhung der Dynamik des Verfahrens beitragen.

Ist der dem Evolventenverlauf zugrundeliegende Evolventengrundkreis größer als der größte Grundkreis des zu profilfräsenden Zahns, dann können die Verfahrensbedingungen zur Berechnung der Fräsabschnitte noch weiter vereinfacht werden, weil damit Hinterschneidungen aufgrund der Krümmungseigenschaften des Fräswerkzeugs ausschließbar sind.

Insbesondere bei einem Profilfräser für eine Evolventenverzahnung kann sich als vorteilhaft herausstellen, wenn dem Evolventenverlauf zugrundeliegende Evolventengrundkreis größer als der größte Grundkreis der Evolventen der Zahnflanke ist. Damit kann auf einfache Weise auch eine Verfahrensbedingung für ein Kegelrad ermöglicht werden, bei dem eine Zahnflanke mit einer Vielzahl an Evolventen gefräst werden soll. Bei Kegelrädern ist sohin von den Evolventen der größte Grundkreis zu betrachten, wo hingegen beim Stirnrad lediglich ein Grundkreis berücksichtigt werden muss. Sohin kann ein einfaches und schnelles Verfahren zum Profilfräsen geschaffen werden, was insbesondere auch die Vorteile von geringen Profilabweichungen ermöglichen kann, das sonst nur von äußerst an die Zahnflanke angenäherten konkaven Fräsprofilen sowie von Formfräsern bekannt ist.

Um eng verzahnte Verzahnungen herstellen zu können, schlägt die Erfindung weiter vor, bei einem Verfahren zum Profilfräsen einen fingerförmigen Schaftfräser als Fräswerkzeug zu verwenden.

Die Erfindung löst die erfindungsgemäße Aufgabe hinsichtlich der Vorrichtung dadurch, dass das Fräswerkzeug ein Fräsprofil mit zumindest teilweise einem Evolventenverlauf aufweist.

Weist das Fräswerkzeug ein Fräsprofil mit zumindest teilweise einem Evolventenverlauf auf, dann kann es, wie bereits zum Verfahren vorstehend beschrieben, möglich werden, anhand einer geringen Anzahl an Fräswerkzeugen eine Vielzahl an verschiedensten Flankenformen herstellen zu können, wenn das Fräswerkzeug abschnittsweise die Zahnflanke bearbeitet. Ein derartiger Abschnitt muss nicht unbedingt an den letzten Abschnitt direkt anschließen, Überlappungen sind bevorzugt vorzusehen, um damit die Profilabweichungen in der Zahnflankenform zu verringern. Somit kann anhand eines der Zahnflankenform nicht entsprechenden Fräswerkzeugs ein besonderer Kompromiss zwischen einem Formfräser und einem konkaven Fräser bzw. Schaftfräser oder Kugelfräser mit deren Vielzahl an Bahnen bzw. Abschnitten gefunden werden, was nicht nur die Konstruktion der Vorrichtung vereinfacht, sondern eine kostengünstige Vorrichtung schaffen kann, weil auf Grundlage einer verminderten Anzahl an Fräswerkzeugen eine universell einsetzbare Vorrichtung geschaffen werden kann.

Das Fräswerkzeug kann sich noch weiter dadurch auszeichnen, dass der dem Evolventenverlauf zugrunde liegende Evolventengrundkreis größer als der größte Grundkreis des zu profilfräsenden Zahns ist. Damit wird das Fräswerkzeug noch universeller einsetzbar, weil durch das fräsbedingte Aufmaß Hinterschneidungen gering gehalten werden können.

Insbesondere hat sich ein Fräswerkzeug ausgezeichnet, wenn der dem Evolventenverlauf zugrundeliegende Evolventengrundkreis größer als der größte Grundkreis der Evolvente der Zahnflanke ist. Damit kann auf einfache und kostengünstige Weise mit der erfindungsgemäßen Vorrichtung eine Stirnradverzahnung oder eine Kegelradverzahnung hergestellt werden.

Ist das Fräswerkzeug ein Schaftfräser, so können durch die Vorrichtung kleinste Verzahnungsgeometrien geschaffen werden, was das Anwendungsgebiet der Vorrichtung weiter vorteilhaft verbessern kann.

Insbesondere hat sich für ein Profilfräsen als vorteilhaft herausgestellt, wenn dafür ein konkaves, insbesondere schaftförmiges Fräswerkzeug, dessen Fräsprofil zumindest teilweise einen Evolventenverlauf ausbildet, zum abschnittsweisen Profilfräsen einer Zahnflanke eines Zahns aus einem Werkstück verwendet wird. Damit kann nämlich unter anderem die Profilabweichung gleichzeitig mit der Anzahl an Fräsabschnitten vermindert werden, so dass gegenläufige Bedingungen überwunden werden können.

Die Verwendung kann für Evolventenverzahnungen verbessert werden, wenn der dem Evolventenverlauf zugrundeliegende Evolventengrundkreis größer als der größte Grundkreis der Evolventen der Zahnflanke ist.

### Kurze Beschreibung der Zeichnung

In den Figuren ist beispielsweise ein Ausführungsbeispiel dargestellt. Es zeigen
- Fig. 1: eine nur teilweise dargestellte Seitenansicht einer Vorrichtung zum Profilfräsen,
- Fig. 2: eine teilweise Darstellung eines ersten Verfahrensschritt beim abschnittsweisen Profilfräsen einer Zahnflanke,
- Fig. 3: einen weiteren Verfahrensschritt des abschnittsweisen Profilfräsens nach Fig. 2 und
- Fig. 4: eine Schnittansicht auf die Bahnen, die aufgrund des abschnittsweisen Profilfräsens am Werkstück entstehen.

### Weg zur Ausführung der Erfindung

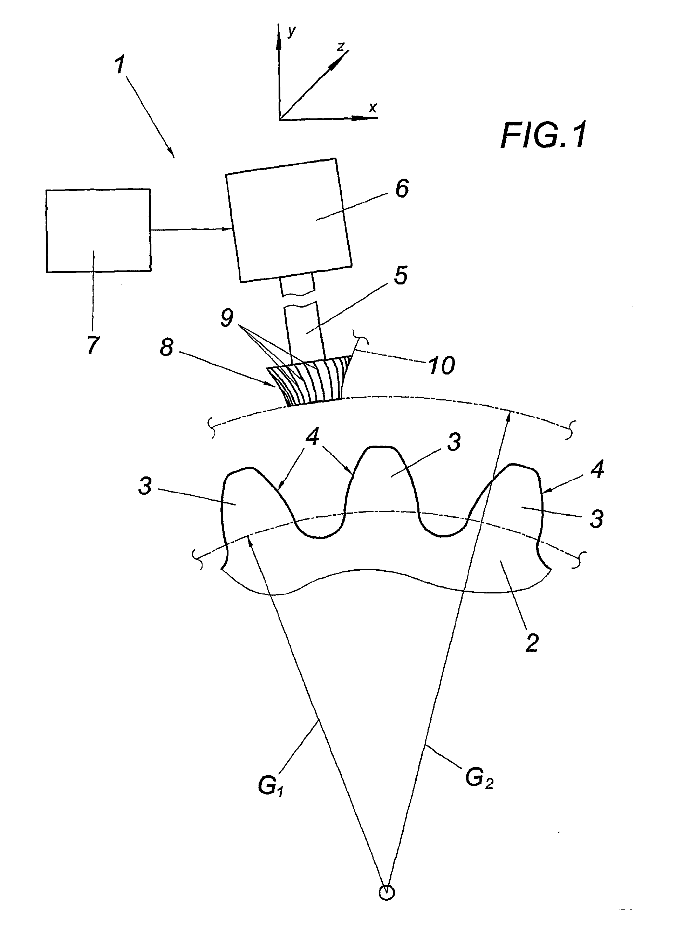

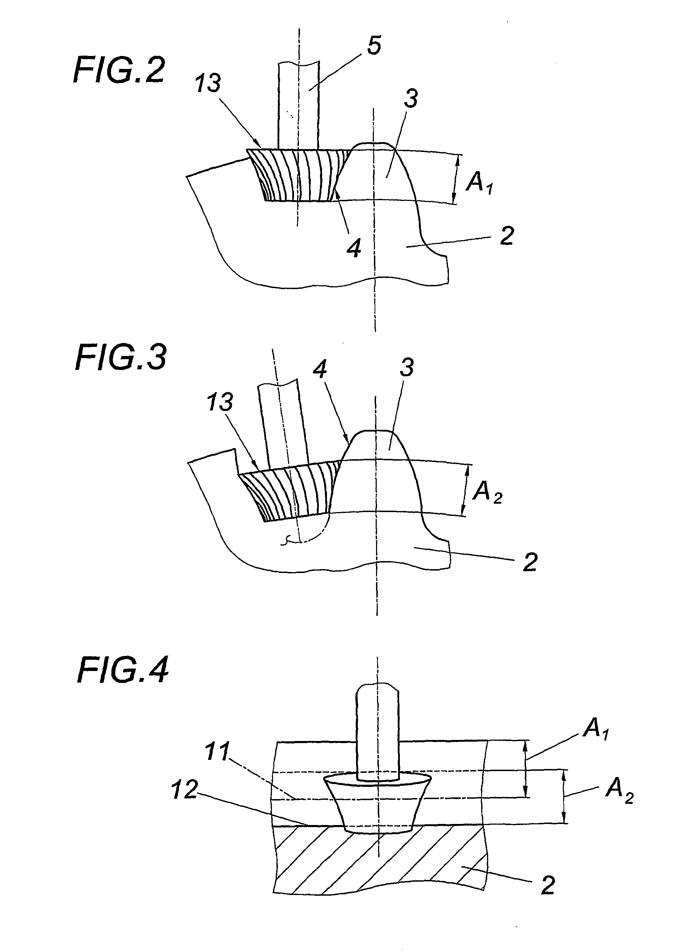

In der beispielsweise nach Fig. 1 dargestellten als Werkzeugmaschine ausgebildeten Vorrichtung 1 wird ein Werkstück 2 gezeigt, indem bereits Zähne 3 mit Zahnflanken 4 eingefräst worden sind. Zum Zwecke des Fräsens weist die Vorrichtung 1 ein konkaves Fräswerkzeug 5 auf, dass vom einem Werkzeughalter 6 gehalten und in Drehung versetzt wird. Über den Werkzeughalter 6 kann dass Werkzeug 5 in wenigstens 3 Freiheitsgraden x, y und z bewegt werden. Zu diesem Zweck ist eine Steuereinrichtung 7 vorgesehen, die das Werkzeug 5 je nach berechneter Winkellage an das Werkstück 2 anstellen kann. Um besondere Verfahrenbedingungen zu schaffen, insbesondere eine hohe Flankengenauigkeit sowie ein schnellen Bearbeitung zu ermöglichen, weist das Fräswerkzeug 5 ein besonders konkaves Fräsprofil 8 auf, wobei sich das Fräsprofil 8 durch die Drehung des Fräswerkzeugs 5 in Verbindung mit seinen Schneiden 9 bildet. Das Fräsprofil 8 weist nämlich einen in Fig. 1 gezeigten Evolventenverlauf 10 mit einem zugrundeliegenden Evolventengrundkreis G2 auf, wobei die sich dadurch ergebenden Vorteile näher in den Figuren 2 bis 4 dargestellt werden. So ist in den Figuren 2 und 3 zu erkennen, dass mit dem Fräswerkzeug 5 zunächst der obere Abschnitt A1 der Zahnflanke 4 gefräst wird und anschließend in einem zweiten Arbeitsschritt der untere Teil A2 der Zahnflanke 4 weiter ausgefräst wird. Durch dieses abschnittsweise Fräsen der Zahnflanke 4 ist auch gemäß Fig. 4 zu erkennen, dass zum Fräsen des Zahns 3 bzw. seiner Zahnflanke 4 lediglich zwei Bahnen 11 und 12 für die jeweiligen, hier überlappenden Abschnitte A1 und A2 notwendig sind. Aufgrund der besonderen Wahl des konkaven Fräsprofils 8 kann, wie sich in Fig. 2 und 3 zeigt, eine Zahnflanke 4 bereits mit zwei Frässchritten abschnittsweise hergestellt werden. Dafür muss lediglich das Fräswerkzeug 5 über den Werkzeughalter 6 dementsprechend bewegt werden, beispielsweise in dem das Fräswerkzeug 5 zwischen den zwei Fräsabschnitten A1 und A2 unterschiedlich an das Werkstück 2 angestellt wird. Zwar ist in den Figuren 2 bis 4 ein Fräswerkzeug 5 mit einem Fräskopf 13 dargestellt, der eine vergleichsweise große Lücke schafft, dies dient jedoch nur zur Veranschaulichung, schlanke insbesondere fingerförmige Schaftwerkzeuge, die nicht weiter dargestellt sind, können hierfür ohne weiteres verwendet werden.

Das vom Verlauf der Zahnflanke 4 abweichende Fräsprofil 8 kann unter anderem an den unterschiedlichen Grundkreisen G1 und G2 der Evolvente des Zahns 3 und der Evolvente bzw. des Evolventenerlaufs 10 des Fräsprofils 8 erkannt werden. Es kann daher erfindungsgemäß die Zahnflanke 4 schnell geschaffen werden, wobei sich insbesondere durch den Evolventenverlauf 10 des Fräsprofils 8 gegenüber dem Stand der Technik besonders einfache Verfahrensbedingungen sowie eine universell verwendbare Vorrichtung 1 ergeben.

Wie bereits in Fig. 1 angedeutet kann es zur Verminderung von Hinterschneidungen beim Fräsen nach den Figuren 2 bis 4 von Vorteil sein, wenn der Grundkreis G2, der dem Evolventenverlauf 10 zugrunde liegt, größer als der Grundkreis G1 des zu profilfräsenden Zahns 3 ist. Ein so mögliches Aufmaß beim Fräsen kann beispielsweise mit einer erhöhten Anzahl an Bahnen ohne weiteres bereinigt werden, so dass stets eine profilgenaue Zahnflanke 4 durch unterschiedliche Anstellwinkel, möglich durch die Freiheitsgrade x, y, z, fräsbar ist.

Bei einem Stirnrad mit Evolventenverzahnung ergibt sich als Bedingung, dass der dem Evolventenverlauf 10 zugrundeliegende Grundkreis G2 größer dem einzigen Grundkreis G1 des Stirnrads sein muss. Wo hingegen bei einem Kegelrad mit Evolventenverzahnung es einen Bereich an Grundkreisen G1 für die an der Zahnflanke vorkommenden Evolventen besteht, was nicht näher dargestellt worden ist. Auch hier kann eine einfache Bedingung gefunden werden, nämlich dass der Evolventengrundkreis G2 des Fräsprofils 8 größer als die Grundkreise der, an der Zahnflanke vorkommenden Evolventen sein muss.

## Patentansprüche

1. Verfahren zum Profilfräsen wenigstens einer Zahnflanke (4) eines Zahns (3) aus einem Werkstück (2) bei dem die Zahnflanke (4) mit mindestens einem Fräswerkzeug (5) abschnittsweise gefräst wird, welches Fräswerkzeug (5) ein konkaves und ein gegenüber der zu fräsenden Zahnflanke (4) zumindest teilweise abweichendes Fräsprofil (8) aufweist, wobei das Fräswerkzeug (5) zwischen wenigstens zwei Fräsabschnitten (A1, A2) unterschiedlich an das Werkstück (2) angestellt wird, **dadurch gekennzeichnet, dass** die Zahnflanke (4) mit einem Fräswerkzeug (5) abschnittsweise gefräst wird, das ein Fräsprofil (8) mit zumindest teilweise einem Evolventenverlauf (10) aufweist.

2. Verfahren nach Anspruch 1, **dadurch gekennzeichnet, dass** der dem Evolventenverlauf (10) zugrundeliegende Evolventengrundkreis (G2) größer als der größte Grundkreis (G1) des zu profilfräsenden Zahns (1) ist.

3. Verfahren nach Anspruch 1 oder 2, **dadurch gekennzeichnet, dass** der dem Evolventenverlauf (10) zugrundeliegende Evolventengrundkreis (G2) größer als der größte Grundkreis (G2) der Evolventen der Zahnflanke (4) ist.

4. Verfahren nach Anspruch 1, 2 oder 3, **dadurch gekennzeichnet, dass** als Fräswerkzeug (5) ein insbesondere fingerförmiger Schaftfräser verwendet wird.

5. Vorrichtung zum Profilfräsen wenigstens einer Zahnflanke (4) eines Zahns (3) aus einem Werkstück (2) mit einem Fräswerkzeug (5), das ein konkaves und ein gegenüber der zu fräsenden Zahnflanke (4) zumindest teilweise abweichendes Fräsprofil (8) aufweist, mit einem, das Fräswerkzeug (5) haltenden und dieses wenigstens in drei Freiheitsgraden (x, y, z) bewegbaren Werkzeughalter (6), und mit einer mit dem Werkzeughalter (6) verbundenen Steuereinrichtung (7), die zwischen wenigstens zwei Fräsabschritten (A1, A2) an der Zahnflanke (4) mit dem Werkzeughalter (6) zum unterschiedlichen Anstellen des Fräswerkzeugs (5) an das Werkstück (2) verbindet, **dadurch gekennzeichnet, dass** das Fräswerkzeug (5) ein Fräsprofil (8) mit zumindest teilweise einem Evolventenverlauf (10) aufweist.

6. Vorrichtung nach Anspruch 5, **dadurch gekennzeichnet, dass** der dem Evolventenverlauf (10) zugrundeliegende Evolventengrundkreis (G2) größer als der größte Grundkreis (G1) des zu profilfräsenden Zahns (3) ist.

7. Vorrichtung nach Anspruch 5 oder 6, **dadurch gekennzeichnet, dass** der dem Evolventenverlauf (10) zugrundeliegende Evolventengrundkreis (G2) größer als der größte Grundkreis (G1) der Evolventen der Zahnflanke (4) ist.

8. Vorrichtung nach einem der Ansprüche 5 bis 7, **dadurch gekennzeichnet, dass** das Fräswerkzeug (5) ein Schaftfräser ist.

9. Verwendung eines konkaven, insbesondere schaftförmigen Fräswerkzeugs (5), dessen Fräsprofil (8) zumindest teilweise einen Evolventenverlauf (10) ausbildet, zum abschnittsweisen Profilfräsen einer zumindest teilweise vom Fräsprofil (8) abweichenden Zahnflanke (4) eines Zahns (3) aus einem Werkstück (2).

10. Verwendung nach Anspruch 9, **dadurch gekennzeichnet, dass** der dem Evolventenverlauf (10) zugrundeliegende Evolventengrundkreis (G2) größer als der größte Grundkreis (G2) der Evolventen der Zahnflanke (4) ist.

## Claims

1. A method for profile milling at least one tooth flank (4) of a tooth (3) from a workpiece (2) in which the tooth flank (4) is sectionally milled using at least one milling tool (5), this milling tool (5) having a concave milling profile (8), which deviates at least partially in relation to the tooth flank (4) to be milled, wherein the milling tool (5) is infed differently to the workpiece (2) between at least two milling sections (A1, A2), **characterized in that** the tooth flank (4) is sectionally milled using a milling tool (5), which has a milling profile (8) at least partially having an involute curve (10).

2. The method according to Claim 1, **characterized in that** the involute base circle (G2), on which the involute curve (10) is based, is larger than the largest base circle (G1) of the tooth (1) to be profile-milled.

3. The method according to Claim 1 or 2, **characterized in that** the involute base circle (G2), on which the involute curve (10) is based, is larger than the largest base circle (G2) of the involute of the tooth flank (4).

4. The method according to Claim 1, 2, or 3, **characterized in that** a finger-shaped shaft miller in particular is used as a milling tool (5).

5. A device for profile milling at least one tooth flank (4) of a tooth (3) from a workpiece (2) using a milling tool (5), which has a concave milling profile (8), which deviates at least partially in relation to the tooth flank (4) to be milled, having a tool holder (6), which holds the milling tool (5) and can move it in at least three degrees of freedom (x, y, z), and having a control unit (7), which is connected to the tool holder (6), and which connects to the tool holder (6) for the differing infeed of the milling tool (5) to the workpiece (2) between at least two milling sections (A1, A2) on the tooth flank (4), **characterized in that** the milling tool (5) comprises a milling profile (8) at least partially having an involute curve (10).

6. The device according to Claim 5, **characterized in that** the involute base circle (G2), on which the involute curve (10) is based, is larger than the largest base circle (G1) of the tooth (3) to be profile-milled.

7. The device according to Claim 5 or 6, **characterized in that** the involute base circle (G2), on which the involute curve (10) is based, is larger than the largest base circle (G1) of the involute of the tooth flank (4).

8. The device according to one of Claims 5 to 7, **characterized in that** the milling tool (5) is a shaft miller.

9. A use of a concave, in particular shaft-shaped milling tool (5), the milling profile (8) of which at least partially forms an involute curve (10), for the sectional profile milling of a tooth flank (4), which at least partially deviates from the milling profile (8), of a tooth (3) from a workpiece (2).

10. The use according to Claim 9, **characterized in that** the involute base circle (G2), on which the involute curve (10) is based, is larger than the largest base circle (G2) of the involute of the tooth flank (4).

## Revendications

1. Procédé pour le profilage à la fraise d'au moins un flanc de dent (4) d'une dent (3) sur une pièce d'oeuvre (2), dans lequel le flanc de dent (4) est fraisé par sections avec au moins un outil de fraisage (5), lequel outil de fraisage (5) présente un profil de fraisage (8) concave et un profil au moins partiellement différent du flanc de dent (4) à profiler, l'outil de fraisage (5) étant appliqué différemment sur la pièce d'oeuvre (2) entre deux sections à profiler (A1, A2), **caractérisé en ce que** le flanc de dent (4) est fraisé par sections avec un outil de fraisage (5) qui présente un profil de fraisage (8) avec au moins partiellement une courbe de développante (10).

2. Procédé selon la revendication 1, **caractérisé en ce que** le cercle de base de développante (G2) à la base de la courbe de développante (10) est plus grand que le plus grand cercle de base (G1) de la dent (1) à profiler.

3. Procédé selon la revendication 1 ou 2, **caractérisé en ce que** le cercle de base de développante (G2) à la base de la courbe de développante (10) est plus grand que le plus grand cercle de base (G2) des développantes du flanc de dent (4).

4. Procédé selon la revendication 1, 2 ou 3, **caractérisé en ce que** l'outil de fraisage (5) utilisé est une fraise à queue, en particulier en forme de doigt.

5. Dispositif pour le profilage à la fraise d'un flanc de dent (4) d'une dent (3) à partir d'une pièce d'oeuvre (2) avec un outil de fraisage (5) qui présente un profil de fraisage (8) concave et un profil au moins partiellement différent du flanc de dent (4) à profiler, avec un porte-outil (6) retenant l'outil de fraisage (5) et pouvant déplacer celui-ci au moins selon trois degrés de liberté (x, y, z), et avec une installation de commande (7) reliée avec le porte-outil (6), qui relie entre au moins deux sections à profiler (A1, A2) sur le flanc de dent (4) avec le porte-outil (6) pour une application différente de l'outil de fraisage (5) sur la pièce d'oeuvre (2), **caractérisé en ce que** l'outil de fraisage (5) présente un profil de fraisage (8) avec au moins une courbe de développante (10).

6. Dispositif selon la revendication 5, **caractérisé en ce que** le cercle de base de développante (G2) à la base de la courbe de développante (10) est plus grand que le plus grand cercle de base (G1) de la dent (3) à profiler.

7. Dispositif selon la revendication 5 ou 6, **caractérisé en ce que** le cercle de base de développante (G2) à la base de la courbe de développante (10) est plus grand que le plus grand cercle de base (G2) des développantes du flanc de dent (4).

8. Dispositif selon l'une des revendications 5 à 7, **caractérisé en ce que** l'outil de fraisage (5) est une fraise à queue.

9. Utilisation d'un outil de fraisage (5), concave, en particulier en forme de tige, dont le profil de fraisage (8) forme au moins partiellement une courbe de développante (10), pour le profilage à la fraise par sections d'un flanc de dent (4) d'une dent (3) d'une pièce d'oeuvre (2) différant au moins en partie du profil de fraisage (8).

10. Utilisation selon la revendication 9, **caractérisée en ce que** le cercle de base de développante (G2) à la base de la courbe de développante (10) est plus grand que le plus grand cercle de base (G2) des développantes du flanc de dent (4).
